# EUROPÄISCHE PATENTANMELDUNG

(11) **EP 2 320 286 A1**
(43) Veröffentlichungstag der Anmeldung: **11.05.2011**
(21) Anmeldenummer: 09013989.0
(22) Anmeldetag: 07.11.2009
(51) Int. Cl.: G05B 19/042, B29C 65/34

(54) **Verfahren zum Protokollieren von Prozessinformationsdaten**

(71) Anmelder: Leister Process Technologies, 6056 Kägiswil (CH)
(72) Erfinder: Ott, Simon, 5105 Auenstein (CH); Gubler, Ulrich, 6343 Rohkreuz (CH)
(74) Vertreter: Klocke, Peter

(57) **Zusammenfassung**

Die Erfindung betrifft ein Verfahren zum automatischen Protokollieren der Prozessdaten (9) eines mobilen Schweißgerätes zum Verbinden von thermoplastischen Kunststoffteilen, die vorzugsweise ortsfest angeordnet sind. Erfindungsgemäß werden mit den Prozessparametern (8) des Schweißvorgangs die geografischen Positionsdaten (12) des Schweißgerätes kontinuierlich oder in bestimmten zeitlichen Abständen als Prozessinformationsdaten (7) aufgezeichnet werden. Die geografische Position des Schweißgerätes wird dafür mit einem Georeferenzsystem automatisch fortlaufend ermittelt. Dadurch können die aufgezeichneten Prozessparameter wiederum den vorhandenen Schweißnähten direkt zugeordnet werden.

## Beschreibung

Die Erfindung betrifft ein Verfahren zum automatischen Protokollieren von Prozessdaten eines mobiles Schweißgerätes zum Verbinden von thermoplastischen Kunststoffteilen, die vorzugsweise ortsfest angeordnet sind.

Die Erfassung, Übertragung und Auswertung von Prozessdaten gewinnt bei vielen Herstellungsprozessen angesichts der ständig wachsenden Qualitätsanforderungen und des daraus erwachsenen Qualitätsbewusstseins immer mehr an Bedeutung. Dies gilt insbesondere auch für die Herstellung von Schweißnähten, zum Verbinden von thermoplastischen Kunststoffteilen, die ortsfest angeordnet sind. Unter ortsfest angeordneten Kunststoffteilen werden in diesem Zusammenhang beispielsweise Kunststofffolien oder Kunststoffbahnen verstanden, die im Hoch-, Tief-, Berg-, Wasser- oder Tunnelbau zur Abdichtung verwendet werden. Derartige Dichtungsbahnen werden nach dem Auslegen mit mobilen Handschweißgeräten oder Schweißautomaten entlang ihren Rändern stoffschlüssig und damit dichtend miteinander verbunden.

Das Verschweißen der Folien oder Bahnen aus thermoplastischem Kunststoffmaterial erfolgt üblicherweise unter Anwendung von bekannten Heißgas-, Heißluft- oder Heizkeilverfahren zum Verbinden von sich überlappenden Randbereichen der Kunststoffteile. Beim Schweißvorgang nach den vorstehend genannten Verfahren werden die Heizeinrichtungen der mobilen Schweißgeräte auf eine zum Anschmelzen der Oberfläche der Kunststoffteile geeignete Temperatur gebracht und mit gleichmäßiger, auf die Temperatur der Heizeinrichtung angepasster Geschwindigkeit entlang der Ränder der Kunststoffteile bewegt, wobei nach dem Plastifizieren der Oberfläche die Randbereiche gegeneinander gepresst werden und dabei, abkühlen. Eine über die Erstreckung gleich bleibende Qualität der Schweißnaht lässt sich am einfachsten mit einem Schweißautomaten erreichen, bei dem die Temperatur der Heizeinrichtung sowie die Geschwindigkeit der Fortbewegung und der Anpressdruck einstellbar und regelbar sind.

Es ist bekannt, zur Gewinnung von Informationen zur Beurteilung der Qualität einer Kunststoffschweißverbindung und/oder zur Steuerung bzw. Regelung des Kunststoffschweißverfahrens Schweißparameter wie beispielsweise Fügeweg oder die Temperatur der Kunststoffteile lokal an der Schweißstelle mit Messmitteln zu erfassen und zusammen mit den Maschinenparametern wie beispielsweise die Antriebsgeschwindigkeit, Temperatur der Heizeinrichtung (Heißluft oder Heizkeil) oder Fügekraft zu protokollieren und auszuwerten. Dabei erfolgt die Protokollierung üblicherweise mit Datum und Uhrzeit.

In der Regel erfordert eine Abdeckung von größeren Flächen mit Dichtfolien oder ―bahnen eine Vielzahl von versetzt zueinander angeordneten Schweißnähten. Für eine abschließende Qualitätsauswertung wäre es oft wünschenswert, den Prozessdaten zugeordnet noch die jeweilige Position des mobilen Schweißgerätes auf der Fläche zu kennen. Auf diese Weise wäre es einfach möglich, bei der nachträglichen Auswertung erkannte mögliche Schwachstellen der Schweißnaht zu lokalisieren, um sie vor Ort zu prüfen und gegebenenfalls zu reparieren.

Der Erfindung liegt die Aufgabe zu Grunde, eine Möglichkeit vorzuschlagen, mit der sich die Position des mobilen Schweißgeräts beim Erstellen einer Schweißnaht zu einem bestimmten Zeitpunkt genau ermitteln lässt, um die Prozess- und Maschinendaten mit dieser Position zu protokollieren, respektive abzuspeichern.

Diese Aufgabe wird erfindungsgemäß durch ein Verfahren mit den Merkmalen des Anspruchs 1 gelöst. Weitere vorteilhafte Ausgestaltungen sind den rückbezogenen Ansprüchen zu entnehmen.

Gemäß dem erfindungsgemäßen Verfahren wird mit den Prozessparametern des Schweißvorgangs die geografische Position des Schweißgeräts kontinuierlich oder in bestimmten zeitlichen Abständen als Prozessinformationsdaten aufgezeichnet. Zu den Prozessparametern zählen zumindest die an dem mobilen Schweißgerät einstellbaren für das Schweißergebnis wesentlichen Schweißparameter, also zumindest die Temperatur, mit der die zu verbindenden thermoplastischen Kunststoffteile beaufschlagt werden. Bei nicht handgeführten Schweißgeräten kann zusätzlich die Geschwindigkeit protokolliert werden, mit der sich das Schweißgerät beim Erzeugen der Schweißnaht bewegt. Diese Prozessparameter können dabei dem Datum und der Uhrzeit zugeordnet aufgezeichnet werden.

Günstig ist es außerdem, wenn beispielsweise die Umgebungstemperatur, die Luftfeuchtigkeit, ldentifikationsdaten des Schweißgerätes und der Bedienungsperson mit festgehalten werden. Zusätzlich kann die Protokollierung einer Objektkennung der ortsfesten Kunststoffteile den Prozessparametern zugeordnet vorgesehen sein. Von besonderem Vorteil ist die kontinuierliche synchrone Erfassung der geografischen Position des Schweißgerätes beim Herstellen der Schweißnaht. Mittels der aufgezeichneten Prozessinformationsdaten, die eine Zeit- und eine Ortsinformation für das mobile Schweißgerät vorzugsweise für jeden Zeitpunkt des Schweißvorgangs enthalten, ist jede Stelle der Schweißnaht gut individualisierbar und damit einfach identifizierbar.

Vorzugsweise wird die geografische Position des Schweißgerätes mit einem Georeferenzsystem automatisch ermittelt. Als Georeferenzsystem wird jede Art von automatischem System verstanden, mit dem die Position eines Punktes auf der Erdoberfläche genau identifiziert werden kann. Dabei kann die Lage jedes Punktes sowohl durch seine 2-D- oder 3-D-Koordinaten angegeben werden. Zur Positionsbestimmung wird ein an dem mobilen Schweißgerät angebrachtes elektronisches Ermittlungsgerät verwendet, das ein Sende- und/oder Empfangsmodul aufweist. Das elektronische Ermittlungsgerät arbeitet zur Positionsbestimmung des mobilen Schweißgerätes mit mindestens einem lokalen oder globalen Referenzsender zusammen, der elektromagnetische Wellen aussendet. Mit dem Georeferenzsystem sind Positionsbestimmungen bis in den Zentimeterbereich möglich. Bei dem globalen Referenzsender kann es sich um ein satellitengestütztes Navigations- oder Vermessungssystem zur weltweiten Positionsbestimmung, wie beispielsweise um ein Global Positioning System (GPS) handeln. Bei dem lokalen Referenzsender wird die Position relativ zu diesen bestimmt und in einem lokalen Koordinatensystem erfasst. Falls gewünscht, kann in einem weiteren Schritt die relative Position in eine absolute georeferenzierte Position anhand der bekannten Position des Referenzsenders umgerechnet werden. Dies ist insbesondere von Vorteil bei Anwendungen im Tunnel oder in Hallen, bei denen kein Satellitenempfang möglich ist.

Gemäß einer bevorzugten Ausführungsform der Erfindung werden die Prozessinformationsdaten über eine beliebige Zeitdauer erfasst und in einem zur Weiterverarbeitung geeigneten Datenformat abgespeichert. Die Prozessinformationsdaten werden als Echtzeitmesswerte ermittelt und unmittelbar in Speicherdaten umgesetzt. Sie können direkt in einem internen elektronischen Speicher der Steuerung des Schweißgerätes abgespeichert oder auf einem lösbar mit dem Schweißgerät gekoppelten elektronischen Speichermedium, beispielsweise einem USB-Stick, aufgezeichnet werden. Auch eine drahtlose Übertragung zu einem abgesetzten Massenspeicher ist möglich.

Die Prozessinformationsdaten können an einem beliebig oft veränderbaren Ort über eine beliebig wählbare Zeitdauer elektronisch erfasst und aufgezeichnet werden. Die gespeicherten Prozessparameter und die damit verknüpfte geografische Position des Schweißgerätes können vor Ort optional in dem Schweißgerät zusätzlich analysiert und vorverarbeitet werden und sind jederzeit abrufbar. Zum anderen können die auf dem portablen elektrischen Speichermedium zwischengespeicherten Prozessinformationsdaten in einer zentralen Prozesskontrollstelle ebenfalls analysiert und überwacht werden. Insbesondere bei der Auswertung der Prozessinformationsdaten ist verfahrensgemäß vorgesehen, dass die Prozessinformationsdaten einer Datenverarbeitungseinrichtung zugeführt werden. Bei der Datenverarbeitungseinrichtung kann es sich um eine lokale oder eine zentrale Datenverarbeitungseinrichtung handeln.

Die Datenverarbeitungseinrichtung bereitet die verschiedenen Prozessparameter der zugeordneten geografischen Position entsprechend auf und fasst sie vorzugsweise zu Datensätzen zusammen, die vorzugsweise zwischengespeichert werden. Die so erzeugten Datensätze stehen den Nutzern auf Abruf zur Verfügung. Die Datenverarbeitungseinrichtung kann beispielsweise eine Rechnereinheit eines PDA, eines Laptops oder eines Desktop-PCs sein. Alternativ werden die Prozessinformationsdaten computergestützt von einer Datenverarbeitungseinrichtung verarbeitet, analysiert und visualisiert, die in einer Rechnereinheit der Steuerung des Schweißgerätes vorgesehen ist. Dabei können die Prozessinformationsdaten kontinuierlich in Echtzeit ausgewertet, angezeigt und falls gewünscht als Datensätze abgespeichert werden.

Bei einer bevorzugten Variante des erfindungsgemäßen Verfahrens werden die Prozessinformationsdaten zur Prozesssteuerung für den Schweißvorgang verwendet. Dazu werden die Datensätze beispielsweise in Form von zeitund/oder georeferenzierten Polygonzyklen aufbereitet und dargestellt, denen ein Toleranzband mit kritischen Eckwerten zugeordnet ist. Im Falle, dass ein oder mehrere der Prozessparameter den Eckwerten entsprechen, wird bei einem nicht vollautomatisch arbeitenden Schweißgerät die Bedienperson optisch und/oder akustisch alarmiert, bei einem Schweißautomaten erfolgt außerdem sofort eine Korrektur der entsprechenden Schweißparameter. Mit den in den Prozessinformationsdaten enthaltenen, einander zugeordneten Zeit- und Positionsangaben kann die Bewegungsgeschwindigkeit des mobilen Schweißgerätes analysiert und überwacht werden. Dies ermöglicht, die Schweißgeschwindigkeit für eine Schweißnaht bei einem Schweißautomaten einfach zu regeln.

Mit Hilfe der Prozessinformationsdaten kann insbesondere ein Schweißstellenplan erstellt werden, der mit grafischen Daten einer Erdoberflächen- oder Objektaufnahme verknüpft ist und mit der entsprechenden Aufnahme zusammen abgebildet wird. Dabei können die einzelnen Schweißnähte als Linien dargestellt werden. Zusätzlich können dem Schweißplan bei der Prozesskontrolle als auffällig ermittelte Stellen der Schweißnaht überlagert angezeigt werden. Bei Kenntnis von Kontur und Maßen der zu verbindenden Kunststoffteile können diese ebenfalls in den Schweißstellenplan eingetragen werden.

Nachfolgend wird die Erfindung anhand zweier schematischer Übersichtsskizzen näher erläutert. Weitere Merkmale der Erfindung ergeben sich aus der folgenden Beschreibung der Erfindung in Verbindung mit den Ansprüchen und der beigefügten Zeichnung. Es zeigen:
- Figur 1: ein mobiles Schweißgerät beim Verbinden von ortsfest angeordneten Kunststoffbahnen nach dem erfindungsgemäßen Verfahren; und
- Figur 2: eine Übersicht der beim in Figur 1 dargestellten Schweißverfahren protokollierten Prozessinformationsdaten.

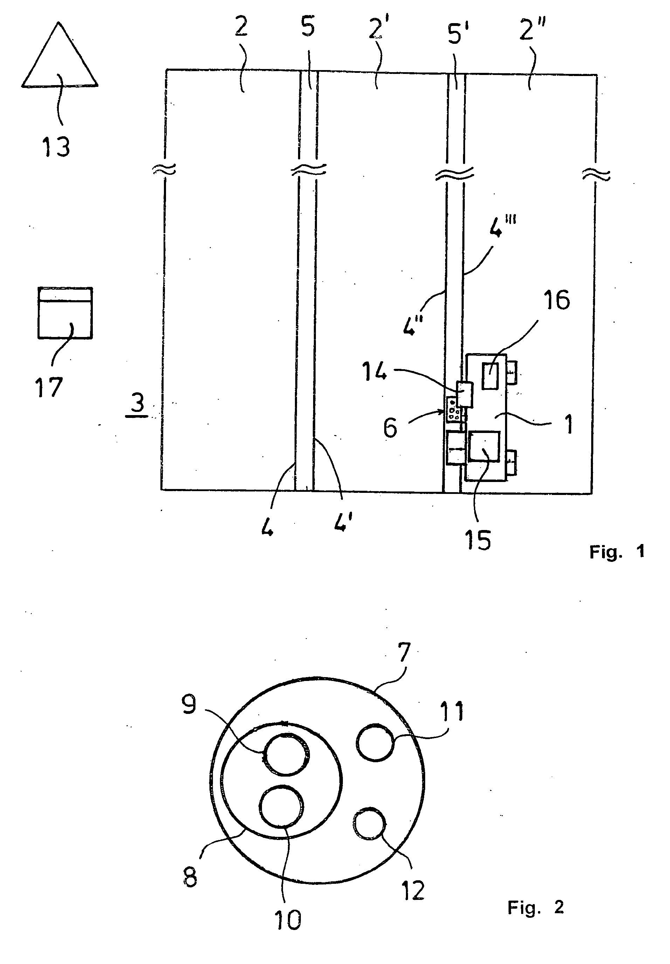

Die Figur 1 zeigt beispielhaft ein mobiles Schweißgerät 1 in Form eines Schweißautomaten beim Verbinden von thermoplastischen Kunststoffteilen 2, 2', 2", die als rechteckige Dichtungsbahnen auf einen ebenen Untergrund 3 angeordnet sind. Während dem durchgeführten Schweißvorgang, bei dem die ortsfest angeordneten Dichtungsbahnen 2, 2', 2" an ihren überlappenden Rändern 4, 4', 4", 4''' nach dem Heizkeilverfahren dichtend miteinander verbunden werden, werden Schweißnähte 5, 5' erzeugt. Zur Herstellung der Schweißnähte 5, 5' werden die Ränder 4, 4' bzw. 4", 4'" der Kunststoffteile 2, 2', 2" durch ein von einem Heizkeil gebildeten Heizeinrichtung 6, die Teil des Schweißgerätes 1 ist, kontinuierlich und mit gleichmäßiger Geschwindigkeit entlang der zu erzeugenden Schweißnähte 5, 5' bewegt.

Dabei werden gemäß dem erfindungsgemäßen Verfahren Prozessinformationsdaten 7, deren Zusammensetzung in der Figur 2 dargestellt ist, automatisch kontinuierlich aufgezeichnet. Die Prozessinformationsdaten 7 umfassen Schweißparameter 8, die sich aus den an dem Schweißautomaten 1 eingestellten Prozessdaten 9 und den aus den Umgebungsdaten 10 der Schweißstelle zusammensetzen. Die Prozessdaten 9 beinhalten beispielsweise die Temperatur des Schweißkeils 6, die Fahrgeschwindigkeit des Schweißautomaten 1, die Fügekraft oder der Fügeweg, die Umgebungsdaten 10 beispielsweise die Temperatur der Luft bzw. des Untergrundes 3 sowie die Luftfeuchtigkeit. Zusätzlich zu den prozessrelevanten Prozessparametern können noch Zusatzdaten 11 mit aufgezeichnet werden, beispielsweise eine Identnummer des Schweißautomaten 1 und der den Schweißvorgang ausführenden Bedienperson. Des Weiteren gehören zu den Prozessinformationsdaten 7 die Positionsdaten 12 des Schweißautomaten 1 während der Erzeugung der Schweißnähte 5, 5'. Gemäß dem erfindungsgemäßen Verfahren zum automatischen Protokollieren der Prozessinformationsdaten 7 werden mit den Prozessparametern 8 des Schweißvorgangs die geografischen Positionsdaten 12 des Schweißautomaten 1 kontinuierlich aufgezeichnet.

Die zur Aufzeichnung verwendeten Positionsdaten 12 des Schweißautomaten 1 werden mittels einem Georeferenzsystem, das von einem Georeferenzsender 13 und einem Georeferenzempfänger 14 gebildet ist, automatisch ermittelt. Bei dem Georeferenzsender 13 handelt es sich um ein GPS-Satelliten-System im Orbit, das mit dem an dem Schweißautomat 1 vorgesehenen Georeferenzempfänger 14 kommuniziert. Der Georeferenzempfänger 14 ist in unmittelbarer Nähe des Heizkeils 6 an dem Schweißautomat angeordnet. Auf diese Weise kann die jeweilige lokale Position des Heizkeils 6 exakt ermittelt und aufgezeichnet werden. Die Prozessinformationsdaten 6 werden mittels einer Steuerung 15 des Schweißautomaten 1 aufbereitet und auf einem portablen Speichermodul 16, beispielsweise einem USB-Stick, gespeichert. Mit dem USB-Stick 16 können die Prozessinformationsdaten 7 einer Datenverarbeitungseinrichtung 17, beispielsweise einem Laptop, zur Verarbeitung, Analyse und Visualisierung zugeführt werden. Der Laptop 17 kann die Prozessinformationsdaten 7 in einer gewünschten Sortierung als Grafik ausgeben und so beispielsweise einen Schweißstellenplan erzeugen.

Die in dem Ausführungsbeispiel den Positionsdaten 12 des Schweißgerätes zugeordneten Prozessparameter 8 sowie die Zusatzdaten 11 können beliebig variiert werden.

## Patentansprüche

1. Verfahren zum automatischen Protokollieren der Prozessdaten (9) eines mobilen Schweißgerätes (1) zum Verbinden von thermoplastischen Kunststoffteilen (2, 2', 2"), die vorzugsweise ortsfest angeordnet sind, **dadurch gekennzeichnet, dass** mit Prozessparametern (7) des Schweißvorgangs die geografischen Positionsdaten (12) des Schweißgerätes (1) kontinuierlich oder in bestimmten zeitlichen Abständen als Prozessinformationsdaten (7) aufgezeichnet werden.

2. Verfahren nach Anspruch 1, **dadurch gekennzeichnet, dass** die geografische Position des Schweißgerätes (1) mit einem globalen Georeferenzsystem (13, 14) relativ zu mindestens einem globalen Referenzsender (13) automatisch ermittelt wird.

3. Verfahren nach Anspruch 1, **dadurch gekennzeichnet, dass** die geografische Position des Schweißgerätes (1) mit einem lokalen Georeferenzsystem (13, 14) automatisch relativ zu mindestens einem lokalen Referenzsender (13) ermittelt wird.

4. Verfahren nach einem der Ansprüche 1-3, **dadurch gekennzeichnet, dass** die Prozessinformationsdaten (7) über eine beliebige Zeitdauer erfasst und in einem zur Weiterverarbeitung geeigneten Datenformat abgespeichert werden.

5. Verfahren nach einem der vorstehenden Ansprüche, **dadurch gekennzeichnet, dass** die Prozessinformationsdaten einer Datenverarbeitungseinrichtung (17) zugeführt werden.

6. Verfahren nach Anspruch 5, **dadurch gekennzeichnet, dass** die Prozessinformationsdaten (7) von der Datenverarbeitungseinrichtung (17) verarbeitet, analysiert und visualisiert werden.

7. Verfahren nach Anspruch 6, **dadurch gekennzeichnet, dass** die Prozessinformationsdaten (7) zur Prozesssteuerung für den Schweißvorgang verwendet werden.

8. Verfahren nach einem der vorstehenden Ansprüche, **dadurch gekennzeichnet, dass** die Prozessinformationsdaten zum Erstellen eines Schweißstellenplans verwendet werden.

9. Verfahren nach Anspruch 1, **dadurch gekennzeichnet, dass** als mobiles Schweißgerät (1) ein Schweißautomat verwendet wird.
